(19) Europäisches Patentamt
European Patent Office
Office européen des brevets

(11) **EP 0 808 543 B1**

(12) **EUROPÄISCHE PATENTSCHRIFT**

(45) Veröffentlichungstag und Bekanntmachung des Hinweises auf die Patenterteilung:
**28.04.1999  Patentblatt 1999/17**

(21) Anmeldenummer: **96903975.9**

(22) Anmeldetag: **03.02.1996**

(51) Int Cl.⁶: **H04N 9/31**

(86) Internationale Anmeldenummer:
**PCT/EP96/00456**

(87) Internationale Veröffentlichungsnummer:
**WO 96/25008 (15.08.1996 Gazette 1996/37)**

(54) **FESTKÖRPERLASERSYSTEM FÜR FARBBILDPROJEKTION**

SOLID-STATE LASER SYSTEM FOR COLOURED IMAGE-PROJECTION

SYSTEME LASER A SOLIDE POUR PROJECTION D'IMAGES COULEURS

(84) Benannte Vertragsstaaten:
**CH DE FR GB IT LI**

(30) Priorität: **08.02.1995  DE 19504047**

(43) Veröffentlichungstag der Anmeldung:
**26.11.1997  Patentblatt 1997/48**

(73) Patentinhaber: **DaimlerChrysler AG**
**70567 Stuttgart (DE)**

(72) Erfinder:
• **HALLDORSSON, Thorsteinn**
  **D-81925 München (DE)**
• **KÖNIGER, Max**
  **D-81479 München (DE)**
• **MEHNERT, Axel**
  **D-81377 München (DE)**
• **PEUSER, Peter**
  **D-85521 Riemerling (DE)**
• **REITHMEIER, Günter**
  **D-85640 Putzbrunn (DE)**
• **SCHMITT, Nikolaus**
  **D-80797 München (DE)**
• **ZELLER, Paul**
  **D-81827 München (DE)**
• **SEILMEIER, Alois**
  **D-95448 Bayreuth (DE)**
• **GRAENER, Heinrich**
  **D-95488 Eckersdorf (DE)**

(56) Entgegenhaltungen:
**WO-A-93/20657        US-A- 3 818 129**
**US-A- 5 295 143**

**Beschreibung**

Die Anmeldung betrifft ein Lasersystem gemäß dem Oberbegriff der Ansprüche 1 und 2. Ein solches Lasersystem ist aus der WO 91/12556 bekannt. Hier wird die Herstellung von geeigneten rot/grün/blauen Strahlen mit mindestens einem, hier sind es zwei, IR-Dauerstrichlaser (Laserdiode) in dem Wellenlängenbereich 850 - 1320 nm beschrieben, in dem die Farben unter Anwendung von Frequenzverdopplung und Summenfrequenzbildung gewonnen werden und ein optischer parametrischer Oszillator zur Frequenzkonversion eingesetzt wird.

Aus der DE 43 06 797 C1 ist ein Lasersystem zur Herstellung der geeigneten rot/grün/blauen Strahlen für eine allgemeine Farbbildprojektion mit mindestens einem, hier drei, Laser bekannt.

Aus "Appl. Phys. Lett. 58 (12), 25.03.91, S. 1227 - 1229, ist ein Lasersystem zur Herstellung der geeigneten rot/grün/blauen Strahlen für insbesondere hochauflösende Laserdrucker mit mindestens einem, hier zwei, IR-Dauerstrichlaser (Laserdiode) in dem Wellenlängenbereich 850 bis 1320 nm bekannt, in dem die Farben durch Frequenzkonversion, und zwar unter Anwendung von Frequenzverdopplung und Summenfrequenzbildung gewonnen werden.

Aus Appl. Phys. Lett. 56 (9), 26.02.90, S. 811-813 ist ein Lasersystem zur Herstellung der geeigneten rot/grün/blauen Strahlen für eine allgemeine Farbbildprojektion mit einem einzigen Laser bekannt.

Aus Optics Letters, Oct. 15, 1990, Vol. 15, No 20, S.1129 - 1131 ist es bekannt, sowohl die Signalwelle als auch die Idlerwelle eines OPO's zu verwenden und aus der J. Opt. Soc. Am.B, Vol. 10, No.11, Nov. 93, S. 2151 ist es bekannt, den Abstimmbereich einer Lichtquelle durch Kombinieren von Frequenzverdopplungs- und /oder Summenfrequenzbildungsschritten mit stimulierter parametrischer Wechselwirkung zu vergrößern. Optische parametrische Oszillatoren (OPO's) sind beispielsweise aus der DE 42 19 169 A1 bekannt.

Der Erfindung liegt die Aufgabe zugrunde, ein Lasersystem der eingangs genannten Art derart weiterzubilden, daß es eine hohe Strahlqualität mit einem Strahldurchmesser x Strahldivergenz-Produkt nahe der Beugungsgrenze und bestimmte Farben im sichtbaren Wellenlängenbereich (RGB) aufweist, die eine gute Überdeckung des Farbempfindlichkeitsbereiches des menschlichen Auges durch Farbmischung ermöglichen, eine mittlere optische Leistung von einigen Hundert Milliwatt bis einige Watt besitzt und durch kleine Bauweise mit einem guten Wirkungsgrad optimiert ist. Es sollen alle 3 Farben in einem einzigen Lasersystem mit den genannten Anforderungen erzeugt werden.

Diese Aufgabe wird durch die in den Ansprüchen 1 und 2 aufgezeigten Maßnahmen gelöst. In den Unteransprüchen sind Ausgestaltungen und Weiterbildungen angegeben und nachfolgend an Ausführungsbeispielen beschrieben.

In diesem Konzept bildet ein effizienter IR-Dauerstrichlaser, der Seltenerd- oder Übergangselemente verwendet, die einzige größere aktive elektrooptische Baugruppe des Systems. Zum Erreichen der geforderten langen Lebensdauer und hohen Effizienz wird vorgeschlagen, Halbleiterlaserdioden zur Anregung des IR-Dauerstrichlaser, der Seltenerd- oder Übergangselemente verwendet, zu benutzen.

Die RGB (Rot, Grün, Blau)-Nutzstrahlen werden aus der IR-Emission des IR-Dauerstrichlaser, der Seltenerd- oder Übergangselemente verwendet, durch eine einfache passive nichtlineare Frequenzkonversion abgeleitet. Durch die gemeinsame Anregungsquelle für alle Farben wird die Komplexität des Systems minimiert. Mit dem intermittierenden IR-Dauerstrichlaser, der Seltenerd- oder Übergangselemente verwendet, hoher Pulsspitzenleistung wird eine hohe Effizienz der Frequenzkonversion erreicht. In dem OPO können die Zwischenfrequenzen und damit auch die Wellenlänge der Nutzstrahlung zur Farbanpassung kontinuierlich abgestimmt werden.

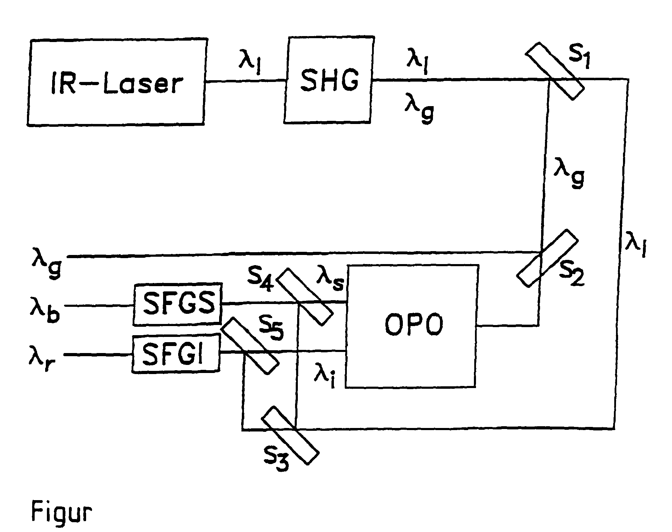

Die Figur zeigt eine schematische Darstellung einer möglichen Ausführungsform des Lasersystems. Die grüne Strahlung im Wellenlängenbereich 510-550 nm wird durch eine direkte Frequenzverdopplung der Strahlung eines IR-Festkörperlasers; wie z.B. des wohlbekannten Nd:YAG-Lasers oder verwandten Lasers wie des Nd:YLF oder Yb:YAG, gewonnen. Aus der Emissionswellenlänge $\lambda_1 = 1047$ nm (z.B. für Nd:YLF) entsteht die geeignete Linie bei $\lambda_g = 524$ nm. Nach dem Durchgang durch den Frequenzverdoppler (SHG) besteht der Strahl aus einem Gemisch der beiden Wellenlängen der IR Strahlung und der grünen Strahlung.

Mit einem dichroitischem Strahlteiler (S1) werden beide Strahlen unterschiedlicher Wellenlänge voneinander getrennt. In einem weiteren Strahlteiler (S2) wird dann der grüne Nutzstrahlanteil abgespalten. Der zweite Teil des grünen Strahles, der als Pumpstrahl der Wellenlänge $\lambda_g$ für den OPO dient, wird dort mit hoher Effizienz in einen Signalstrahl der Wellenlänge $\lambda_s$ und einen Idlerstrahl der Wellenlänge $\lambda_i$ konvertiert. Durch Wahl einer geeigneten Kristallorientierung und/oder Kristalltemperatur des nichtlinearen Kristalls im OPO können die Ausgangswellenlängen $\lambda_s$ und $\lambda_i$ (unter Berücksichtigung der Enerergierhaltungsbedingung $\omega_g = \omega_s + \omega_i$) festgelegt werden.

Der IR-Strahl des Lasers wird mit einem Strahlteiler (S3) aufgeteilt, die beiden Teilstrahlen anschließend mit Hilfe zweier dichroitischer Spiegel (S4 und S5) jeweils mit den Signal- und Idlerstrahl überlagert und anschließend in nichtlinearen Kristallen (SFGS und SFGI) mit hoher Effizienz gemischt.

Die Frequenzen $\omega_s$ und $\omega_i$ werden so gewählt, daß die Summe ihrer Frequenzen mit der Frequenz der Grundwelle des IR-Lasers $\omega_l$ die Frequenzen der benötigten Farben blau, $\omega_b = \omega_l + \omega_i$ bzw. rot $\omega_r = \omega_l + \omega_s$ in den geforderten Wellenlängenbereichen ergeben.

Mit der Verwendung eines Nd:YLF-Lasers mit der IR-Grundwelllenlänge $\lambda_l = 1047$ nm könnten mit diesem Aufbau z.B. die folgenden geeigneten RGB-Wellenlängen hergestellt werden:

$$\lambda_r = 620 \text{ nm}$$

$$\lambda_g = 524 \text{ nm}$$

$$\lambda_b = 450 \text{ nm}$$

Die Signal- und Idlerwellenlängen des OPO's wären in diesem Falle:

$$\lambda_s = 789 \text{ nm}$$

$$\lambda_i = 1520 \text{ nm}$$

Als weitere Ausführungsformen dieser Erfindung ist es möglich, mit einer Laserwellenlänge in einem kurzwelligeren Bereich (860-920 nm) als erstes die blaue Wellenlänge im Wellenlängenbereich 430-460 nm durch Frequenzverdopplung zu erzeugen und die restliche Laserwelle zum Pumpen des OPO's zu benutzen und dann anschließend die übrigen Farben grün und rot durch Frequenzmischung der IR-Laserstrahlung mit der Signal- bzw. Idlerstrahlung wie vorher herzustellen.

Eine weitere mögliche Variante wäre die Verwendung der IR-Laserstrahlung zum Pumpen des OPO's und Frequenzmischung der frequenzverdoppelten bzw. verdreifachten IR-Strahlung mit der Signal- bzw. der Idlerstrahlung zur Erzeugung der zusätzlichen zwei Farben.

Der Bedarf an optischer Leistung bzw. die Gesamteffizienz lassen sich für ein derartiges System im praktischen Fall wie folgt abschätzen: Mit 40 W mittlerer Leistung bei $\lambda_l = 1{,}047$ μm lassen sich 12 W mittlere Leistung bei $\lambda_g = 524$ nm erzeugen. Ein Wirkungsgrad von 30 % für die Frequenzverdopplung wird in lampengepumpten, modengekoppelten Hochleistungslasern erreicht. Wirkungsgrade bis zu 50% in diodengepumpten Systemen erscheinen aufgrund verbesserter Strahlqualität möglich und wurden mit niedrigeren Leistungen demonstriert (G.P.A. Malcolm, M. Ebrahimzade, A.I. Ferguson "Efficient Frequency Conversion of Mode-Locked Diode-Pumped and Tunable All-Solid-State Laser Sources", IEEE J. Quant. Electr. 28 (1992) 1172). Photonenkonversionseffizienzen von jeweils 30% in den Signal- und Idlerstrahl werden in einem OPO erwartet, so daß ca. 2,6 W bzw 1,4 W bei den Wellenlängen $\lambda_s = 789$ nm und $\lambda_i = 1520$ nm zur Verfügung stehen. Die Summenfrequenzerzeugung mit der restlichen, sehr intensiven Strahlung der Wellenlänge $\lambda_l$ (20-30 W) erlaubt eine Quanteneffizienz von ca. 30%, was zu Ausgangsleistungen von 1-2 W für die rote und blaue Nutzstrahlung führt.

Der optische Wirkungsgrad bei der Konversion der Pumpdiodenstrahlung in die primäre IR-Laserstrahlung beträgt heute typisch 30-40%, der elektrisch-optische Wirkungsgrad der Pumpdiode ist 30-50%. Der gesamte elektrisch-optische Wirkungsgrad von einigen Prozent dürfte damit erreichbar sein.

Als nichtlineare Kristalle für die Frequenzverdopplung, im OPO und für die Summen- bzw. Differenzfrequenzerzeugung können prinzipiell alle effizienten nichtlinearen Materalien wie z.B. Kalium Titanyl Phosphat (KTP) oder Beta Barium Borat (BBO), Lithium Triborat (LBO), Kalium Titanyl Arsenat, Kalium- und Lithium Niobat oder auch Lithium Jodat eingesetzt werden. Prinzipiell kommen auch Polymere mit hohen nichtlinearen Koeffizienten in Frage.

Grundsätzlich können die hier beschriebenen Frequenzumwandlungprozesse sowohl mit Laserstrahlung im Dauerstrich als auch mit gepulster Laserstrahlung realisiert werden. Da die Effizienz dieser Prozesse in erster Näherung proportional der Leistungsdichte der Strahlung ist, besteht hier ein erheblicher Vorteil in der Verwendung von gepulsten Systemen mit hoher Pulsspitzenleistung, wie sie modengekoppelte Laser bieten.

Nach dem heutigen Stand der Technik ist das Erreichen einer vergleichbaren Gesamteffizienz in Dauerstrichsystemen erheblich schwieriger, komplexer und kostenintensiver.

Bei der Verwendung von gepulsten Systemen zur Bildprojektion mit der schnellen Ablenkung des Laserstrahles über die Bildfläche und der gleichzeitigen Modulation der Strahlintensität der drei kollinearen RGB-Strahlen ist es notwendig, daß die Pulswiederholfrequenz des Lasers mindestens gleich oder höher ist als die Bildpunktfrequenz (Pixelfrequenz). Je nach eingesetzem Projektionsstandard liegt diese im Bereich von 10-100 MHz.

Für diese hohe Pulsfrequenz sind vor allem die modengekoppelten Dauerstrichlaser geeignet. Es kann sowohl eine aktive Modenkopplung, z.B. mit Hilfe von akustooptischen Modulatoren bzw. eine passive Modenkoppelung mit geeigneten ausbleichbaren Materalien innerhalb des Resonators, zum Erreichen der hohen Pulsfrequenz eingesetzt werden. Mit einer optischen Länge des Resonators von $L_o$ ergibt sich als Pulswiederholfrequenz f des modengekoppelten Lasers:

$$f = c/2\, L_o$$

wobei c die Lichtgeschwindigkeit im Vakuum bezeichnet. Zum Erzielen von 100 MHz muß die optische Länge $L_o = 150$ cm und von 1 GHz, $L_o = 15$ cm sein. Die verwendete Pulswiederholfrequenz wird sich nach dem Anwendungsfall richten. Es wird aber vorteilhaft sein, die Pulswiederholfrequenz deutlich höher zu wählen als die Bildpunktfrequenz, damit eventuelle Frequenz-, Phasen- bzw. Intensitätsfluktuationen möglichst wenig die Qualität der Bildwiedergabe beeinflussen.

Als modengekoppelte IR-Laser für diese Anwendungen sind vor allem die diodengepumpten Laser der Seltenenerden wie Neodymium und Ytterbium oder Übergangsmetalle wie Titan oder Chrom geeignet. In Zukunft werden wahrscheinlich weitere Kandidaten für effiziente Dauerstrichlaser in dem besonders geeigneten Spektralbereich von 850-1320 nm zur Verfügung stehen. Für diese Anwendung kommen sowohl linear aufgebaute Kristallaser, Ringlaser als auch Glasfaserlaser dotiert mit diesen laserfähigen Ionen in Frage.

Zur Frequenzverdopplung eignen sich Anordnungen, bei denen der gepulste Strahl direkt ohne weitere optische Hilfseinrichtungen in den Frequenzverdoppler-Kristall fokussiert wird. Bei modengekoppelten Lasern kann eine Effizienz der Frequenzverdopplung bereits bis 50% erreicht werden.

Externe Resonatoren können auch zur Verbesserung der Effizienz durch Erhöhung der Verweilzeit der IR-Welle im Frequenzverdoppler eingesetzt werden. Dafür eignen sich sowohl lineare Resonatoren als auch Ringresonatoren. Diese beiden Resonatorstrukturen können auch bei dem optisch parametrischen Oszillator eingesetzt werden. Die Summenfrequenz wird vorzugsweise in einem nichtlinearen Kristall ohne weitere optische Hilfsmittel erzeugt.

Zur Erhöhung der Effizienz sind auch Anordnungen in Betracht zu ziehen, bei denen einzelne Frequenzkonversionsschritte innerhalb eines Resonators (intracavity) stattfinden.

## Patentansprüche

1. Lasersystem zur Herstellung von rot/grün/blauen Strahlen aus mindestens einem IR-Dauerstrichlaser des Wellenlängenbereichs 850 bis 1320 nm durch Frequenzkonversion, nämlich mindestens durch Frequenzmischung und entweder Frequenzverdopplung oder Frequenzverschiebung in einem optischen parametrischen Oszillator, **dadurch gekennzeichnet**, daß für eine allgemeine Farbbildprojektion ein einziger modengekoppelter IR-Dauerstrichlaser, der Seltenerdelemente oder Übergangsmetalle verwendet, eingesetzt wird und daß nach der Frequenzverdopplung eines Teils der IR-Strahlung diese frequenzverdoppelte Strahlung zum Teil direkt für die Bildprojektion benutzt wird, und ein weiterer Teil der frequenzverdoppelten Strahlung als Pumpstrahlung für einen optischen parametrischen Oszillator (OPO) verwendet wird und der geeignete Zwischenfrequenzen als Signal- und Idlerwelle herstellt, die nach einer Frequenzmischung mit dem restlichen Teil der IR-Strahlung in je einem nichtlinearen Kristall je eine der beiden übrigen Farben erzeugt.

2. Lasersystem zur Herstellung von rot/grün/blauen Strahlen aus mindestens einem IR-Dauerstrichlaser des Wellenlängenbereichs 850 bis 1320 nm durch Frequenzkonversion, nämlich mindestens durch Frequenzmischung und entweder Frequenzverdopplung oder Frequenzverschiebung in einem optischen parametrischen Oszillator, **dadurch gekennzeichnet**, daß für eine allgemeine Farbbildprojektion ein einziger modengekoppelter IR-Dauerstrichlaser, der Seltenerdelemente oder Übergangsmetalle verwendet, eingesetzt wird und daß nach der Frequenzverdopplung eines Teils der IR-Strahlung diese frequenzverdoppelte Strahlung zum Teil direkt für die Bildprojektion benutzt wird, daß die restliche, also nicht frequenzverdoppelte IR-Strahlung als Pumpstrahlung für einen optischen parametrischen Oszillator (OPO) verwendet wird und daß die restliche frequenzverdoppelte Strahlung mit der Signal-und der Idlerwelle des OPO's in je einem nichtlinearen Kristall durch Frequenzmischung die zwei zusätzlichen Farben erzeugt.

3. Lasersystem nach Anspruch 1 oder 2, **dadurch gekennzeichnet**, daß die Farben rot/blau/grün in jeweils den Wellenlängenbereichen 620 - 630 nm, 510 - 520 nm, 440 - 460 nm erzeugt werden.

4. Lasersystem nach Anspruch 1 oder 2, **dadurch gekennzeichnet**, daß die mittlere Leistung der einzelnen Strahlen rot/blau/grün je nach Anwendung, der erforderlichen Größe der Projektionsfläche, der Intensität der Hintergrundbeleuchtung und der erforderlichen Helligkeit der Bildfläche angepaßt ist.

5. Lasersystem nach den Ansprüchen 1 bis 4, **dadurch gekennzeichnet**, daß die Pulsfrequenz des modengekoppelten Lasers mindestens gleich der verwendeten Bildpixelfrequenz der Bildprojektion ist.

## Claims

1. Laser system for generating red/gree/blue radiation from at least one IR continuous line laser in the wavelength range between 850 and 1,320 nm by frequency conversion, i.e. at least by frequency mixing and either frequency doubling or frequency offset in an optical parametric oscillator, **characterised in that** a single mode-coupled IR continuous line laser using rare earth elements or transitional metals is used for a general colour image projection, and after frequency doubling of a portion of the IR radiation this frequency doubled radiation is partially used directly for the image projection, and a further portion of the frequency doubled radiation is used as pump radiation for an optical parametric oscillator (OPO) and generates suitable intermediate frequencies as signal and idle wave which, following frequency mixing with the remaining portion of the IR radiation in a respective non-linear crystal, generates one each of the two other colours.

2. Laser system for generating red/green/blue radiation from at least one IR continuous line laser in the wavelength range between 850 and 1,320 nm by frequency conversion, i.e. at least by frequency mixing and either frequency doubling or frequency offset in an optical parametric oscillator, **characterised in that** a single mode-coupled IR continuous line laser using rare earth elements or transitional metal is used for a general colour image projection, and after frequency doubling of a portion of the IR radiation this frequency doubled radiation is partially used directly for the image projection, and the remaining, i.e. not frequency double IR radiation, is used as pump radiation for an optical parametric oscillator (OPO), and the remaining frequency doubled radiation with the signal and the idle wavelength of the OPO generates the two additional colours in a non-linear crystal by way of frequency mixing.

3. Laser system according to Claim 1, or 2, **characterised in that** the colours red/blue/green are respectively generated in wavelength ranges between 620 - 630 nm, 510 - 520 nm, 440 - 460 nm.

4. Laser system according to Claim 1 or 2, **characterised in that** the mean output of the individual radiation red/blue/green is, depending on application, matched with the required dimension of the projection surface, the intensity of the background illumination and required brightness of the image surface.

5. Laser system according to Claims 1 to 4, **characterised in that** the pulse frequency of the mode-coupled laser is at least equal the applied image pixel frequency of the image projection.

## Revendications

1. Système laser pour la production de rayons rouge/vert/bleu à partir d'au moins un laser infrarouge continu de plage de longueurs d'ondes 850 à 1320 nm par conversion de fréquence, à savoir au moins par mélange de fréquences et soit par doublage de fréquence, soit par décalage de fréquence dans un oscillateur optique paramétrique, caractérisé par le fait que pour une projection générale d'images couleurs, on utilise un unique laser infrarouge continu à synchronisation de modes, utilisant des éléments de terres rares ou des métaux de transition, et qu'après le doublage de fréquence, on utilise une partie du rayonnement infrarouge de ce rayonnement doublé en fréquence en partie directement pour la projection d'images et une autre partie du rayonnement doublé en fréquence en tant que rayonnement de pompage pour un oscillateur optique paramétrique (OPO) qui produit des fréquences intermédiaires appropriées en tant qu'onde de signal et parasite qui, après mélange de fréquences avec la partie restante du rayonnement infrarouge, produit chacune des deux autres couleurs respectivement dans un cristal non linéaire.

2. Système laser pour la production de rayons rouge/vert/bleu à partir d'au moins un laser infrarouge continu de plage de longueurs d'ondes 850 à 1320 nm par conversion de fréquence, à savoir au moins par mélange de fréquences et soit par doublage de fréquence, soit par décalage de fréquence dans un oscillateur optique paramétrique, caractérisé par le fait que pour une projection générale d'images couleurs, on utilise un unique laser infrarouge continu à synchronisation de modes, utilisant des éléments de terres rares ou des métaux de transition, et qu'après le doublage de fréquence, on utilise une partie du rayonnement infrarouge de ce rayonnement doublé en fréquences en partie directement pour la projection d'images, qu'on utilise le rayonnement infrarouge restant, donc non doublé en fréquence, en tant que rayonnement de pompage pour un oscillateur optique paramétrique (OPO) et que le rayonnement restant doublé en fréquence produit, avec l'onde de signal et l'onde parasite de l'oscillateur optique paramétrique (OPO), les deux couleurs supplémentaires respectivement par mélange de fréquences dans un cristal non linéaire.

3. Système laser suivant revendication 1 ou 2, caractérisé par le fait que les couleurs rouge/bleu/vert sont produites respectivement dans les gammes de longueurs d'ondes 620-630 nm, 510-520 nm, 440-460 nm.

4. Système laser suivant revendication 1 ou 2, caractérisé par le fait que la puissance moyenne des différents rayons rouge/bleu/vert est adaptée selon l'utilisation, la taille nécessaire de la surface de projection, l'intensité de l'éclairage de fond et la luminosité nécessaire de la surface d'image.

5. Système laser suivant les revendications 1 à 4, caractérisé par le fait que la fréquence d'impulsions du laser à synchronisation de modes est au moins égale à la fréquence de points d'image utilisée de la projection d'image.

Figur